# EUROPÄISCHE PATENTSCHRIFT

(11) **EP 2 167 834 B1**
(45) Veröffentlichungstag und Bekanntmachung des Hinweises auf die Patenterteilung: **18.05.2011**
(21) Anmeldenummer: 08784590.5
(22) Anmeldetag: 02.07.2008
(51) Int. Cl.: F16D 65/14, F16D 65/00, F16J 3/04

(54) **DICHTUNGSANORDNUNG FÜR EXZENTERWELLEN**
SEAL ARRANGEMENT FOR ECCENTRIC SHAFTS
ENSEMBLE D'ÉTANCHÉITÉ POUR ARBRES À EXCENTRIQUE

(30) Priorität: 16.07.2007 DE 102007032965
(43) Veröffentlichungstag der Anmeldung: 31.03.2010
(73) Patentinhaber: KNORR-BREMSE Systeme für Schienenfahrzeuge GmbH, 80809 München (DE)
(72) Erfinder: FREIHERR VON WILMOWSKY, Kaspar, 87544 Blaichach-Ettensberg (DE); FUDERER, Erich, 82265 Fürstenfeldbruck (DE); STALTMEIR, Josef, 80807 München (DE); TÄSCHNER, Wolfgang, 81241 München (DE); OSTLER, Armin, 80469 München (DE)
(74) Vertreter: Mattusch, Gundula
(86) Internationale Anmeldenummer: PCT/EP2008/005377
(87) Internationale Veröffentlichungsnummer: WO 2009/010186

(56) Entgegenhaltungen:
- DE-A1- 2 849 861
- DE-A1-102005 049 058

## Beschreibung

### Stand der Technik

Die Erfindung geht aus von einer Bremszangeneinrichtung einer Schienenfahrzeugbremse, welche wenigstens zwei an voneinander weg weisenden Außenflächen eines eine Exzenterwelle lagernden Gehäuses angeordnete, von je einem endseitigen Exzenterzapfen der Exzenterwelle exzentrisch getriebene Bremszangenhebel beinhaltet, sowie eine Dichtungsanordnung mit wenigstens einer Dichtung zwischen dem Gehäuse und wenigstens einem Bremszangenhebel, gemäß dem Oberbegriff von Anspruch 1.

Eine solche Bremszangeneinrichtung ist beispielsweise aus der DE 44 31 353 C1 bekannt. Dabei sind die Zangenhebel der Bremszangeneinheit auf den Exzenterzapfen drehbar gelagert Die Exzenterwelle ist um ihre Achse im Gehäuse drehbar gelagert, wobei die Bewegungen eines Punktes auf einem der Exzenterzapfen relativ zum Gehäuses entweder durch eine Rotation oder durch zwei senkrecht zueinander gerichtete Translationen beschrieben werden kann.

Eine solche Bremszangeneinrichtung ist Umwettbedingungen wie Spritzwasser im Fahrbetrieb, heißem Strahlwasser bei Reinigung, Schmutz wie Bremsstäub und Sand sowie Schnee und Eis ausgesetzt, weshalb die Abdichtung zwischen den Zangenhebeln, der Exzenterwelle und dem Gehäuse auch unter diesen Bedingungen zuverlässig funktionieren muß.

Bei der bekannten Bremszangeneinrichtung erfolgt die Abdichtung zwischen den Zangenhebeln, der Exzenterwelle und dem Gehäuse über Radialwellendichtringe. Dazu ist im Bereich der Exzenterwelle eine korrosionsbeständige Scheibe mit der Exzenterwelle verschraubt, in welcher eine Aufnahme für einen Radialwellendichtring ausbildet ist, der zum Zangenhebel hin abdichtet. Andererseits ist auf der Scheibe eine Dichtfläche für einen weiteren -Radialwellendichtring vorhanden, welcher in einer Ausnehmung des Gehäuses gelagert ist. Nachteilig bei der Verwendung von Radialwellendichtringen in einer Dichtungsanordnung einer Bremszangeneinrichtung ist, dass sie einen relativ kleinen Querschnitt bei relativ großen Durchmessern der Exzenterwelle aufweisen und die Dichtlippen deshalb eine geringe Vorspannung aufweisen. Weiterhin neigen die Dichtlippen zu Verschteiß, wodurch die Dichtwirkung herabgesetzt wird.

In der DE 10 2005 049 058 A1 ist ebenfalls eine Dichtungsanordnung einer Bremszangeneinrichtung eines Schienenfahrzeugs beschrieben, welche einen geteilte Dichtring in Form von zwei Halbringen beinhaltet. Der geteilte Dichtring ist dabei in einer umtaufenden, gehäusefesten Nut gehalten und wird von einer Zylindrischen, den Zangenhebeln zugeordneten Fläche geführt. Bei der Lagerung des in Schwerkraftrichtung gesehen oberen Zangenhebels ist die Nut gehäusefest ausgebildet und die zylindrische Führungsfläche, befindet sich am Zangenhebel, bei der Lagerung des unteren Zangenhebels ist dagegen die Nut im Zahgenhebel und die Führungsfläche am Gehäuse ausgebildet. Diese unterschiedliche Ausbildung der oberen und unteren Lagerdichtungen ist durch den Schwenkrafteinfluss auf Schmutzwasser begründet, da die Stirnseiten der zylindrischen Führungsflächen mit den jeweils gegenüberliegenden Flächen als Labynnthdichtungen wirken. Dadurch ist der Aufbau der oberen und unteren Dichtungsanordnung allerdings unterschiedlich. Weiterhin sind enge Toteranzen für die Nutlagerungen der Halbringe einzuhalten, um einerseits die gewünschte Spaltdichtwirkung zu erzeugen, andererseits aber ein Gleiten der Halbringe in den Nuten zu ermöglichen.

Der vorliegenden Erfindung liegt die Aufgabe zugrunde, eine Bremszangeneinrichtung einer Schienenfahrzeugbremse der eingangs erwähnten Art derart weiter zu entwickeln, dass ihre Dichtungsanordnung günstiger zu fertigen ist und eine bessere Dichtwirkung aufweist.

Diese Aufgabe wird erfindungsgemäß durch die Merkmale von Anspruch 1 gelöst.

### Vorteile der Erfindung

Die Erfindung basiert auf dem Gedanken, dass die Dichtung eine hermetische Dichtung ist und wenigstens einen einerseits am Gehäuse und andererseits an dem Bremszangenhebel gehaltenen, wenigstens teilweise elastischen Faltenbalg beinhaltet. Gegenüber dem Stand der Technik, welche Spaltdichtungen versenden, weisen hermetische Dichtungen eine bessere Dichtwirkung auf, weil sie unter üblichen Betriebsbedingungen keinen Schmutz oder Feuchtigkeit und höchstens vernachlässigbare Mengen von Gas in den abgedichteten Bereich gestatten. Der Begriff hermetische Dichtung" soll daher hier im Gegensatz zum Begriff "Spaltdichtung" verstanden werden.

Weiterhin können identische Faltenbälge für sämtliche Lagerstellen verwendet werden, da keine Rücksicht auf die Richtung der Schwerkraft genommen werden muss.

Durch die in den Unteransprüchen aufgeführten Maßnahmen sind vorteilhafte Weiterbildungen und Verbesserungen der im Patentanspruch 1 angegebenen Erfindung möglich.

Der Faltenbalg ist dabei derart ausgeführt ist, dass er einer Bewegung des Exzenterzapfens relativ zum Gehäuse in einer zur Achse der Exzenterwelle senkrechten Ebene folgen kann.

Vorzugsweise ist der Faltenbalg wenigstens teilweise aus Gummi gefertigt, bevorzugt vollständig aus einem NBR-Kautschuk (Acrylnitril-Butadien-Kautschuk), wobei die Enden des Faltenbalgs form- und/oder reibschlüssig mit dem Gehäuse und dem Bremszangenhebel verbunden sind.

Wenn wenigstens einige der Falten des Faltenbalgs in eine radiale Ausnehmung einer Hülse hineinragen, welche vorzugsweise mit dem Gehäuse verbunden ist, sind diese definiert gekammert, was verhindert, dass die Falten während der exzentrischen Bewegung des Zangenhebels gegenüber dem Gehäuse eingeklemmt werden.

Besonders bevorzugt ist wenigstens ein Ende des Faltenbalgs mit einem demgegenüber steifen Ring stoffschlüssig verbunden, welcher dann an dem Gehäuse oder an der Hülse formschlüssig gehalten ist. Dieser Stoffschluss wird beispielsweise dadurch herbeigeführt, dass der Ring wenigstens teilweise in den Faltenbalg einvulkanisiert wird.

Dieser Ring kann dann durch eine Scheibe gegen den Bremszangenhebel der das Gehäuse gekontert werden, welche zugleich ein Axiallager zwischen dem Bremszangenhebel und dem Gehäuse bildet und somit eine vorteilhafte Toppelfunktion erfüllt.

Wenn diese Scheibe aus einem schwingungsdämpfenden Gleitlagerwerkstoff, beispielsweise aus Polyamid oder Lagerbronze gefertigt ist, werden die Schwingungen, welchen die Bremszangenhebel im ungebremsten und daher unverspannten Zustand ausgesetzt sind, vorteilhaft gedämpft und eine Obertagung des Körperschalls von den Bremszangenhebeln auf das Gehäuse weitgehend verhindert.

Genaueres geht aus der folgenden Beschreibung von Ausführungsbeispielen hervor.

### Zeichnungen

Nachstehend sind Ausführungsbeispiele der Erfindung in der Zeichnung dargestellt und in der nachfolgenden Beschreibung näher erläutern. In der Zeichnung zeigt
- Fig.1: eine perspektivische Darstellung einer Bremszangeneinrichtung mit Dichtungsanordnungen gemäß einer bevorzugten Ausführungsform der Erfindung;
- Fig.2: eine vergrößerte Querschnittsdarstellung der Dichtungsanordnungen von Fig.1;
- Fig.3: eine Querschnittsdarstellung einer Dichtungsanordnung gemäß einer weiteren Ausführungsform;

### Beschreibung der Ausführungsbeispiele

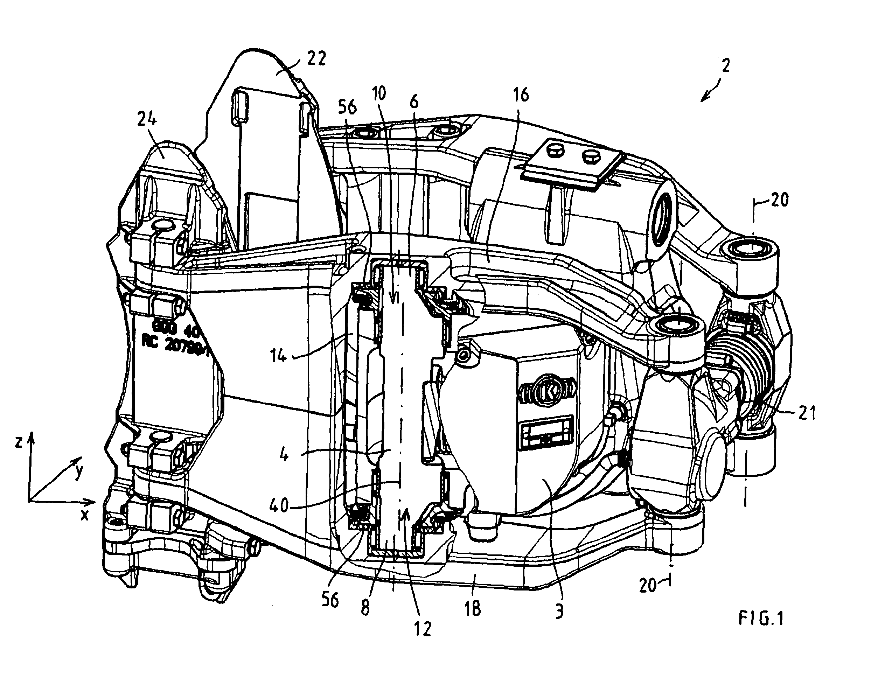

In Fig. 1 ist eine Bremszangeneinrichtung 2 einer Schienenfahrzeugbremse dargestellt, welche mit einer nicht gezeigten Bremsscheibe zusammenwirkt. Die Bremszangeneinrichtung 2 ist in Fig. 1 in Gebrauchslage gezeigt, d.h., dass oben dargestellte Bauelemente auch oben eingebaut sind.

Die Bremszangeneinrichtung 2 wird durch einen hier nicht näher beschriebenen Aktuator 3 betätigt und wirkt auf eine Exzenterwelle 4 mit endseitigen Exzenterzapfen, einem oberen Exzenterzapfen 6 und einem unteren Exzenterzapfen 8, welche aus Gehäusebohrungen 10, 12 eines Gehäuses 14 der Bremszangeneinrichtung 2 herausragend in je einem Bremszangenhebel, einem oberen Bremszangenhebel 16 und einem unteren Bremszangenhebel 18 rotatorisch gelagert sind. In der in Fig.1 gezeigten Gebrauchslage ist die Bremszangeneinrichtung 2 im wesentlichen horizontal angeordnet, so dass in Schwerkraftrichtung gesehen der obere Bremszangenhebel 16 auf einem höheren Niveau als der untere Bremszangenhebel 18 angeordnet ist.

Durch Drehung der Exzenterwelle 4 werden die Bremszangenhebel 16. 18 in Richtung auf die Bremsscheibe zu bewegt, wodurch an den Bremszangenhebein 16, 18 angeordnete Bremsbelaghalter 22, 24 mit Bremsbelägen mit dieser in Reibkontakt treten. Die von den Bremsbelaghaltern 22, 24 weg weisenden Enden der Bremszangenhebel 16, 18 sind an den Enden eines Druckstangenstellers 21 um zur z-Achse parallele Schwenkachsen 20 drehgelagert, der zur Verschleißnachstellung in seiner Länge einstellbar ist. Bei einer Verlängerung des Druckstangenstellers 21 in y-Richtung entfernen sich die Enden der Bremszangenhebel 16, 18 voneinander, wodurch sich diese um die Exzenterzapfen 6, 8 der Exzenterwelle 4 verdrehen, um den Abstand der Belaghalter 22, 24 voneinander zu verkürzen.

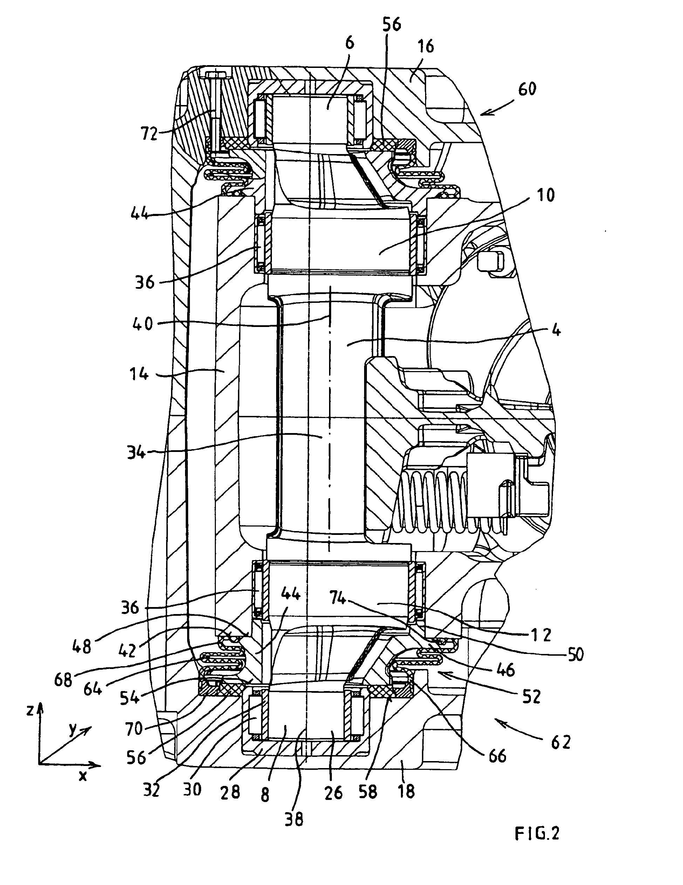

Wie im besten in Fig.2 zu sehen ist, weist der untere Bremszangenhebel 18, welcher hier stellvertretend für den oberen Bremszangenhebel 16 beschrieben wird, eine endseitige Sacklochbohrung 26 auf, in welche eine Hülse 28 eingesetzt ist, deren radial innere Umfangsfläche eine Lagerschale eines äußeren Radialnadellagers 30 bildet, mit welchem der Exzenterzapfen 8 gegenüber dem Bremszangenhebel 18 drehbar gelagert ist. Hierzu ist der Exzenterzapfen 8 von einer Hülse 32 umgeben, welche die andere Lagerschale des äußeren Radialnadellagers 30 bildet. Andererseits ist ein Mittelabschnitt 34 der Exzenterwelle 4 mittels zweier innerer Radialnadellager 36 gegenüber dem Gehäuse 14 drehgelagert. Diese Lagerungen kann der Fachmann den Erfordernissen entsprechend anpassen, sie können beispielsweise auch durch Gleitlagerungen gebildet werden.

Bei rotatorischem Antrieb der Exzenterwelle 4 erfährt die Mittelachse 38 des Exzenterzapfens 8 sowohl eine translatorische Bewegung in Richtung der X-Achse und der Y-Achse als auch eine Rotation um die Mittelachse 40 der Exzenterwelle, welche parallel zur z-Achse oder zur Vertikalen ist. Dieser exzentrischen Bewegungsbahn kann der an der über das äußere Radialnadellager 30 gelagerte Bremszangenhebel 18 folgen, um eine Zuspann- oder Lösebewegung der Bremsbelaghalter 22, 24 gegenüber der Bremsscheibe hervorzurufen.

Eine genaue Beschreibung eines solchen exzentrischen Antriebs ist in der eingangs genannten DE 10 2005 049 058 A1 enthalten, weshalb hier nicht weiter darauf eingegangen werden soll.

Auf die Stimfläche 42 der Gehäusebohrung 12 ist ein Flansch 44 mit einer an einer Flanschschulter 46 ausgebildeten Sitzfläche 48 aufgesetzt, der mit einem Zentrierkragen 50 in die Gehäusebohrung 12 hineinragt und dort vorzugsweise durch Presssitz gehalten wird. Der Flansch 44 bildet somit ein gehäusefestes Bauteil. Die radial äußere Umfangsfläche des Flansches 44 ist mit einer nach radial innen ragenden Ausnehmung 52 versehen. Weiterhin bildet eine vom Gehäuse 14 weg weisende Stimfläche 54 des Flansches 44 eine Gleitlagerfläche für eine Axiallagerscheibe 56.

Die Axiallagerscheibe 56 besteht vorzugsweise aus einem schwingungsdämpfenden Gleitlagerwerkstoff, beispielsweise aus Polyamid oder Lagerbronze. Dadurch werden die Schwingungen, welchen die Bemszangenhebel im ungebremsten und daher unverspannten Zustand ausgesetzt sind, vorteilhaft gedämpft.

Die Axiallagerscheibe 56 ist bevorzugt an der zum Gehäuse 14 weisenden Stimfläche 58 des Bremszangenhebels 18 befestigt, vorzugsweise durch eine in der Querschnittsdarstellung von Fig.2 nicht gezeigte Verschraubung. Die bremszangenhebelfeste Axiallagerscheibe 56 bildet zusammen mit der zugeordneten Gleitlagerfläche, welche hier durch die vom Gehäuse 14 weg weisende Stimfläche 54 des gehäusefesten Flansches 44 gebildet wird, eine Axialgleitlagerung für den Bremszangenhebel 18 relativ zum Gehäuse 14. Wie anhand von Fig.1 leicht vorstellbar ist, treten Axial- oder Querkräfte, d.h. in Bezug zur Mittelachse 40 der Exzenterwelle 4 oder in z-Richtung gerichtete Kräfte auf, wenn bei zugespannter Bremse die Bremsbeläge an die Bremsscheibe angelegt werden und dadurch Reibungskräfte entstehen, welche die am Druckstangensteller 21 endseitig gelagerten Bremszangenhebel 16, 18 senkrecht zu ihrer Längserstreckung in Form von Biegung belasten. Diese Biegebelastung ruft Quer- oder Axialkräfte hervor, die im vorliegenden Fall über die Axiallagerscheibe 56 am Gehäuse 14 abgestützt werden.

Wesentlich ist, dass der Kraftfluss der Quer- oder Axialkräfte in z-Richtung von den Bremszangenhebeln 16, 18 direkt in die zugeordneten Axiallagerscheiben 56 und von dort in die gehäusefesten Flansche 44 und schließlich in das Gehäuse 14 führt, ohne dass die Exzenterwelle 4 oder die Exzenterzapfen 6, 8 in diesen Kraftfluss einbezogen werden. Hingegen werden die auf die Bremszangenhebel 16, 18 wirkenden, aus ihrer Zuspannbewegung herrührenden und in der x-y-Ebene wirkenden Querkräfte über die äußeren Radialnadellager 30 an der Exzenterwelle 4 abgestützt, welche wiederum über die inneren Radialnadellager 36 am Gehäuse 14 abgestützt ist.

Da sich die Bremszangeneinrichtung 2 am Schienenfahrzeug in einem Schmutz- und Spritzwasser ausgesetzten Bereich befindet, muss die Exzenterwelle 4 bzw. deren endseitige Exzenterzapfen 6, 8 gegenüber dem Gehäuse 14 abgedichtet werden.

Fig.2 zeigt eine obere Dichtungsanordnung 60 und eine untere Dichtungsanordnung 62 der Bremszangeneinrichtung 2 im Detail. Stellvertretend für die obere Dichtungsanordnung 60 wird im folgenden der Aufbau der demgegenüber identischen unteren Dichtungsanordnung 62 beschrieben.

Die untere Dichtungsanordnung 62 umfasst wenigstens eine hermetische Dichtung, welche durch wenigstens einen einerseits am Gehäuse 14 und andererseits an dem unteren Bremszangenhebel 18 gehaltenen, wenigstens teilweise elastischen Faltenbalg 64 gebildet wird. Der Faltenbalg 64 ist dabei derart ausgeführt ist, dass er den aus dem exzentrischen Antrieb resultierenden Radialbewegungen des Exzenterzapfens 8 relativ zum Gehäuse 14 in einer zur Mittelachse 40 der Exzenterwelle 4 senkrechten Ebene x-y folgen kann, wobei die Falten des Faltenbalgs 64 diese Bewegungen ausgleichen.

Vorzugsweise ist der Faltenbalg 64 wenigstens teilweise aus Gummi gefertigt, bevorzugt vollständig aus einem NBR-Kautschuk (Acrylnitril-Butadien-Kautschuk), wobei die Enden 66, 68 des Faltenbalgs 64 form- und/oder reibschlüssig mit dem Gehäuse 14 und dem Bremszangenhebel 18 verbunden sind.

Der Faltenbalg 64 umschließt den Flansch 44 radial und hat in Richtung der Mittelachse 40 der Exzenterwelle 4 gesehen (z-Richtung) ungefähr dessen Längserstreckung. Wenigstens einige der Falten des Faltenbalgs 64 ragen in die radiale Ausnehmung 52 des Flansches 44 hinein, welcher mit dem Gehäuse 14 verbunden ist.

Besonders bevorzugt ist das dem Bremszangenhebel 18 zugeordnete Ende 66 des Faltenbalgs 64 mit einem demgegenüber steifen Ring 70 vorzugsweise stoffschlüssig verbunden, welcher an dem Bremszangenhebel 18 vorzugsweise formschlüssig gehalten ist. Dieser Stoffschluss wird beispielsweise dadurch herbeigeführt, dass der Ring 70 wenigstens teilweise in den Faltenbalg 64 einvulkanisiert wird. Dieser Ring 70 ist wie die Axiallagerscheibe 56 bevorzugt an der zum Gehäuse 14 weisenden Stimfläche 58 des Bremszangenhebels 18 durch wenigstens eine Schraube 72 befestigt. Weiterhin umschließt der Ring 70 die Axiallagerscheibe 56.

Andererseits wird das dem Gehäuse 14 zugeordnete Ende 68 des Faltenbalgs 64 zwischen der Sitzfläche 48 des Flansches 44 und der zum Bremszangenhebel 18 weisenden Stimfläche 42 des Gehäuses 14 durch Kraftschluss und/oder Formschluss geklemmt, wozu das Ende 68 eine Querschnittsvergrößerung 74 aufweisen kann, die in einer entsprechenden Ringausnehmung in der Sitzfläche 48 des Flansches 44 aufgenommen ist.

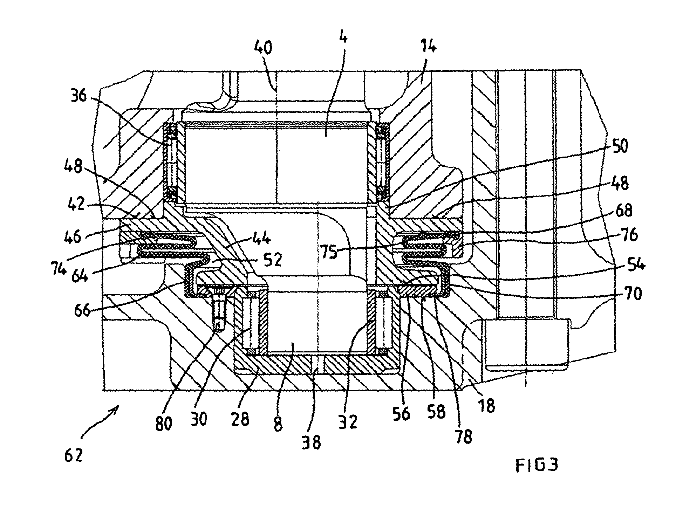

Bei dem weiteren Ausführungsbeispiel nach Fig.3 sind die gegenüber dem vorhergehenden Beispiel gleich bleibenden und gleich wirkenden Teile durch die gleichen Bezugszeichen gekennzeichnet. Im Unterscheid zu diesem ist das dem Flansch 44 oder dem Gehäuse 14 zugeordnete Ende 68 des Faltenbalgs 64 zwischen einer von der Sitzfläche 48 weg weisenden Stimfläche 75 des Flansches 44 und einem separaten Klemmring 76 vorzugsweise formschlüssig geklemmt, der beispielsweise mit dem Flansch 44 verschraubt ist. Weiterhin hat der mit dem anderen Ende 66 des Faltenbalgs 64 vulkanisierte Ring 70 mit L-förmigem Querschnitt einen Schenkel 78, welcher durch die an die Stirnfläche 58 des Bremszangenhebels 18 durch Schrauben 80 geschraubte Axiallagerscheibe 56 übergriffen und dadurch festgeklemmt ist. Ansonsten sind die Dichtungsanordnungen 60, 62 sowie die Lagerung der Exzenterwelle 4 und der Bremszangenhebel 16, 18 identisch wie beim Ausführungsbeispiel gemäß Fig.2 ausgeführt.

Die Anwendung der Dichtungsanordnungen 60, 62 ist nicht auf Bremszangeneinrichtungen 2 beschränkt. Vielmehr können solche Dichtungsanordnungen 60, 62 allgemein zwischen jedem eine Exzenterwelle 4 lagernden Gehäuse 14 und einem aus dem Gehäuse 14 ragenden endseitigen Exzenterzapfen 6, 8 der Exzenterwelle 4 verwendet werden.

### Bezugszeichenliste

- 2: Bremszangeneinrichtung
- 4: Exzenterwelle
- 6: Exzenterzapfen
- 8: Exzenterzapfen
- 10: Gehäusebohrung
- 12: Gehäusebohrung
- 14: Gehäuse
- 16: Bremszangenhebel
- 18: Bremszangenhebel
- 20: Schwenkachse
- 21: Druckstangensteller
- 22: Bremsbelaghalter
- 24: Bremsbelaghalter
- 26: Sacklochbohrung
- 28: Hülse
- 30: Radialnadellager
- 32: Hülse
- 34: Mittelabschnitt
- 36: Radialnadellager
- 38: Mittelachse
- 40: Mittelachse
- 42: Stirnfläche
- 44: Flansch
- 46: Flanschschulter
- 48: Sitzfläche
- 50: Zentrierkragen
- 52: Ausnehmung
- 54: Stimfläche
- 56: Axiallagerscheibe
- 58: Stimfläche
- 60: obere Dichtungsanordnung
- 62: untere Dichtungsanordnung
- 64: Faltenbalg
- 66: Ende
- 68: Ende
- 70: Ring
- 72: Schraube
- 74: Querschnittsvergrößerung
- 75: Stimfläche
- 76: Klemmring
- 78: Schenkel
- 80: Schraube

## Patentansprüche

1. Bremszangeheinrichtung (2) einer Schienenfahrzeugbremse, welche wenigstens zwei an voneinander weg weisenden Außenflächen eines eine Exzenterwelle (4) lagernden Gehäuses (14) angeordnete, von je einem endseitigen Exzenterzapfen (6, 8) der Exzenterwelle (4) exzentrisch getriebene Bremszangenhebel (16, 18) beinhaltet, sowie eine Dichtungsanordnung (60, 62) mit weinigstens einer Dichtung (64) zwischen dem Gehäuse (14) und wenigstens einem Bremszangenhebel (16, 18), **dadurch gekennzeichnet, dass** die Dichtung (64) eine hermetische Dichtung ist und wenigstens einen einerseits am Gehäuse (14) und andererseits an dem Bremszangenhebel (16, 18) gehaltenen, wenigstens teilweise elastischen Faltenbalgs (64) beinhaltert.

2. Bremszangeneinrichtung nach Anspruch 1, **dadurch gekennzeichnet, dass** der Faltenbalg (64) wenigstens teilweise aus Gummi geifertigt ist.

3. Bremszangeneinrichtung nach Anspruch 2, **dadurch gekennzeichnet, dass** die Enden (66, 68) des Faltenbalgs (64) form- und/oder reibschlüssig mit dem Gehäuse (14) und dem Bremszangenhebet (18) verbunden sind.

4. Bremszangeneinrichtung nach wenigstens einem der vorhergehenden Ansprüche, **dadurch gekennzeichnet dass** wenigstens einige der Falten des Fattenbalgs (64) in eine radiale Ausnehmung (52) einer Hülse (44) hineinragen, welche mit dem Gehäuse (14) verbunden ist.

5. Bremszangeneinrichtung nach Anspruch 4, **dadurch gekennzeichnet, dass** wenigstens ein Ende (66) des Faftenbalgs (64) mit einem demgegenüber steifen Ring (70) stoffschlüssig verbunden ist, welcher an dem Gehäuse (14) oder an der Hülse (44) formschlüssig gehalten ist.

6. Bremszangeneinrichtung nach Anspruch 5, **dadurch gekennzeichnet, dass** der Ring (70) durch eine Scheibe (56) gegen den Bremszangenhebel (18) oder das Gehäuse (14) gekontert ist, welche ein Axiallager zwischen dem Bremszangenhebel (18) und dem Gehäuse (14) bildet.

7. Bremszangeneinrichtung nach Anspruch 6, **dadurch gekennzeichnet, dass** die Scheibe (56) aus einem schwingungsdämpfenden Gleitlagerwerkstoff gefertigt ist.

8. Bremszangeneinrichtung nach Anspruch 7, **dadurch gekennzeichnet, dass** die Scheibe (56) aus wenigstens einem Kunststoff gefertigt und mit dem Bremszangenhebel (18) verbunden ist.

9. Bremszangeneinrichtung nach wenigstens einem der vorhergehenden Anspruch, **dadurch gekennzeichnet, dass** der Faltenbalg (64) derart ausgeführt ist, dass er einer Bewegung des Exzenterzapfens (6, 8) relativ zum Gehäuse (14) in einer zur Achse (40) der Exzenterwelle (4) senkrechten Ebene folgen kann

## Claims

1. Brake calliper device (2) of a rail vehicle brake, which contains at least two brake calliper levers (16, 18) arranged at outer surfaces facing away from each other of a housing (14) supporting an eccentric shaft (4), driven eccentrically by respectively one eccentric pin (6, 8) of the eccentric shaft (4) at the end side, and a seal arrangement (60, 62) with at least one seal (64) between the housing (14) and at least one brake calliper lever (16, 18), **characterised in that** the seal (64) is a hermetic seal and contains at least one at least partially elastic bellows (64) held at the housing (14) on the one hand and at the brake calliper lever (16, 18) on the other hand.

2. Brake calliper device according to claim 1, **characterised in that** the bellows (64) is manufactured at least partially of rubber.

3. Brake calliper device according to claim 2, **characterised in that** the ends (66, 68) of the bellows (64) are connected to the housing (14) and the brake calliper lever (18) in a form-fit and/or friction-fit manner.

4. Brake calliper device according to at least one of the preceding claims, **characterised in that** at least some of the folds of the bellows (64) project into a radial recess (52) of a sleeve (44), which is connected to the housing (14).

5. Brake calliper device according to claim 4, **characterised in that** at least one end (66) of the bellows (64) is connected to a ring (70) that is stiff in comparison in a material-fit manner, which is held at the housing (14) or the sleeve (44) in a form-fit manner.

6. Brake calliper device according to claim 5, **characterised in that** the ring (70) is countered by a disc (56) against the brake calliper lever (18) or the housing (14), which forms an axial bearing between the brake calliper lever (18) and the housing (14).

7. Brake calliper device according to claim 6, **characterised in that** the disc (56) is manufactured of a vibration-dampening friction bearing material.

8. Brake calliper device according to claim 7, **characterised in that** the disc (56) is manufactured of at least one plastic material and is connected to the brake calliper lever (18).

9. Brake calliper device according to at least one of the preceding claims, **characterised in that** the bellows is designed in such a manner that it can follow a movement of the eccentric pin (6, 8) relative to the housing (14) in a plane vertical to the axis (40) of the eccentric shaft (4).

## Revendications

1. Dispositif (2) d'étrier d'un frein de véhicule ferroviaire, qui comporte au moins deux leviers (16, 18)) disposés sur deux surfaces extérieures s'éloignant l'une de l'autre, un boîtier (14) servant de palier à un arbre (4) à excentrique et entraîné de manière excentrée par respectivement un maneton (6, 8) du côté de l'extrémité de l'arbre (4) à excentrique ainsi qu'un dispositif (60, 62) d'étanchéité, comprenant au moins une étanchéité (64) entre le boîtier (14) et au moins un levier (16, 18) d'étrier de frein, **caractérisé en ce que** l'étanchéité (64) est une étanchéité hermétique et comporte au moins un soufflet (64), au moins en partie, élastique maintenu d'un côté sur le boîtier (14) et de l'autre côté sur le levier (16, 18) d'étrier de frein.

2. Dispositif d'étrier de frein suivant la revendication 1, **caractérisé en ce que** le soufflet (64) est, au moins en partie, en caoutchouc.

3. Dispositif d'étrier de frein suivant la revendication 2, **caractérisé en ce que** les extrémités (66, 68) du soufflet (64) sont reliées à complémentarité de forme et/ou à frottement au boîtier (14) et au levier (18) d'étrier de frein.

4. Dispositif d'étrier de frein suivant au moins l'une des revendications précédentes, **caractérisé en ce qu'**au moins certains des plis du soufflet (64) pénètrent dans un évidement (52) radial d'un manchon (44), qui est relié au boîtier (14).

5. Dispositif d'étrier de frein suivant la revendication 4, **caractérisé en ce qu'**au moins une extrémité (66) du soufflet (64) est relié à complémentarité de matière avec un anneau (70) rigide opposé, qui est maintenu à complémentarité de forme sur le boîtier (14) ou sur le manchon (44).

6. Dispositif d'étrier de frein suivant la revendication 5, **caractérisé en ce que** l'anneau (70) est bloqué par une rondelle (56) sur le levier (18) d'étrier de frein ou sur le boîtier (14), rondelle qui forme un palier axial entre le levier (18) d'étrier de frein et le boîtier (14).

7. Dispositif d'étrier de frein suivant la revendication 6, **caractérisé en ce que** la rondelle (56) est en un matériau pour palier lisse amortissant les vibrations.

8. Dispositif d'étrier de frein suivant la revendication 7, **caractérisé en ce que** la rondelle (56) est en au moins une matière plastique et est reliée au levier (18) d'étrier de frein.

9. Dispositif d'étrier de frein suivant au moins l'une des revendications précédentes, **caractérisé en ce que** le soufflet (64) est réalisé de manière à pouvoir suivre un déplacement du maneton (6, 8) par rapport au boîtier (14) dans un plan perpendiculaire à l'axe (40) de l'arbre (4) à excentrique.
